(19) Europäisches Patentamt
European Patent Office
Office européen des brevets

(11) EP 2 809 121 B1

(12) **EUROPEAN PATENT SPECIFICATION**

(45) Date of publication and mention of the grant of the patent:
**13.03.2019 Bulletin 2019/11**

(51) Int Cl.:
***H04W 72/08*** *(2009.01)*

(21) Application number: **13305715.8**

(22) Date of filing: **30.05.2013**

# (54) Wireless Telecommunications Network Nodes and Methods

Drahtlose Telekommunikationsnetzwerkknoten und Verfahren

N'uds de réseau de télécommunications sans fil et procédés

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.12.2014 Bulletin 2014/49**

(73) Proprietor: **Alcatel Lucent**
**91620 Nozay (FR)**

(72) Inventors:
- **Kucera, Stepan**
  **Dublin, 15 (IE)**
- **Lopez-Perez, David**
  **Dublin, 15 (IE)**

(74) Representative: **Nokia EPO representatives**
**Nokia Technologies Oy**
**Karaportti 3**
**02610 Espoo (FI)**

(56) References cited:
**WO-A1-2010/108136** **WO-A2-2010/141913**
**US-A1- 2010 260 116**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 809 121 B1

**Description**

FIELD OF THE INVENTION

The present invention relates to wireless telecommunications network nodes, methods and computer program products.

BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. Abase station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

Traditional base stations provide coverage in relatively large geographical areas and those cells are often referred to as macro cells. It is possible to provide a heterogeneous network (hetnet) where smaller-sized cells are provided within macro cells. Such smaller sized cells are sometimes referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

WO2010/ 108 136 discloses a way of reducing intercell interference using UE identifiers in the form of RNTIs. The RNTIs are divided into two subsets, a first subset that is allocated to UEs that it is determined are likely to cause interference and a second subset allocated to those that are not likely to cause interference. This is judged on the UEs attributes such as how close to a cell edge it is located. When a UE does experience interference it searches the RNTIs of the first subset and thus, has a reduced number of RNTIs to search to find the UE causing the interference.

WO2010/ 141913 discloses a system again for reducing interference using time division multiplexing of the available downlink control resources or frequency division multiplexing of the available uplink resources.

SUMMARY

According to a first aspect, there is provided a wireless telecommunications network node method, comprising: identifying a set of user equipment identifiers usable by cells for allocation to user equipment being supported by the cells; defining a set of neighbouring co-channel cells comprising a plurality of cells; and determining a plurality of subsets of the user equipment identifiers, each subset of the user equipment identifiers being allocatable to an associated one of the plurality of cells, user equipment identifiers from the plurality of subsets of user equipment identifiers, when allocated to user equipment, locating corresponding messages for the user equipment within a resource at locations which reduce interference between those messages.

The first aspect recognises that a wireless cellular network typically consists of so-called macro cells (MCs), which are served by base stations (BSs) with transmit powers in the order of tens of Watts, and that provide a radio coverage ranging from hundreds to thousands of meters. In heterogeneous cellular networks (HetNets), low-cost low-power BSs are deployed within the coverage range of the hosting MC to create so-called small cells (SC), which provide high quality wireless connections to unmodified user equipment (UEs) in the network of the operator as illustrated in Figure 1.

Small cells are typically deployed on-demand by both end-users (e.g., so-called femto cells) and the network operator (e.g., so-called metro/pico cells) without any location coordination or network planning. Typical deployment areas are characterized by a poor MC coverage. Private residential deployments usually consist of a single small (femto) cell, but wider areas with complex topology or dense traffic such as urban hot spots and large indoor enterprises require multiple small (metro/pico) cells.

The benefits of SCs go beyond the mainly advertised coverage improvement: They provide for a better quality of service (QoS) and a more efficient usage of energy and spectrum, and also reduce the overall interference and infrastructure capital/ operational expenditure by MC traffic offloading.

In general, SC deployments are restricted to the use of a small fraction of the licensed spectrum allocated to the primary MC network. A practically attractive deployment scenario consists in simultaneous sharing of the available communication channels by both macro and small cells (so-called co-channel deployment) to increase the spatial reuse. However, such co-channel deployments are characterized by traffic/ topology-dependent degradation of transmission quality stemming from collisions of transmitted messages among neighbouring cells, i.e. from inter-cell interference.

Data transmissions are considered to be less affected by co-channel interference than control transmissions thanks to the possibility of periodical frequency-dependent data scheduling on the basis of updated channel quality reports. But as for the control plane, current standards essentially allow active scheduling of control messages only in the time domain, possibly in conjunction with channel quality-aware de-boosting of transmission power. The first aspect recognises that this practical constraint leads in HetNets to failures in the delivery of control message from BSs to UEs, causing handover (HO) failures as mentioned in 3GPP TR 36.839, Mobility Enhancements in Heterogeneous Networks, v 0.5.0. Ultimately, control plane failures can also negatively affect the decoding of the data plane as the control plane conveys the information on downlink/uplink scheduling grants as well as power control commands. It will be appreciated that the problem of control plane reliability aggravates with the density of SC deployments.

If additional resources are available, the techniques of Almost-Blank Subframes and Carrier Aggregation can be used to avoid the degradation of the control plane due to inter-cell interference. However, those approaches imply a lower resource-usage efficiency, but does not solve the fundamental underlying problems outlined above.

Assuming a practical limit on available resources, the elementary reception quality of control transmissions can be enhanced by using power control. For example, in one approach, higher transmit powers are allocated to control channels of UEs with poor channel conditions. However, the fundamental lack of inter-cell coordination can undesirably lead to an even higher level of co-channel interference. Yet the required inter-cell coordination would imply large overhead, even if performed with a period much larger than the LTE data scheduling interval of 1 millisecond.

Given the difficulties associated with control-plane interference mitigation, it may be possible to adopt a "symptomatic" approach by focusing only on particular problems caused by "unavoidable" control plane failures.

In this context, HO unreliability is seen as the most serious issue. To this end, the setting of the HO parameters such as hysteresis and time to trigger is typically optimized, but mainly for MC purposes. In HetNets, however, this approach ultimately leads to a considerable number of HO failures (i.e., call drops), and/or repetitive HOs (so-called "ping-pong" HOs) often ending by a call drop.

There are also schemes that attempt to adaptively optimize the HO parameters by using the estimation of UE mobility parameters such as speed and angle of arrival. Yet, a major drawback of such an approach consists in the fact that the performance of the proposed solutions depends upon a correct detection of UE mobility states with respect to the actual cell size and large-scale channel fading phenomena such as shadowing. Given the technical constraints such as cell-wide broadcast of the cell-selection bias, and the inherent trade-offs between HO reliability and ping-pong HO occurrences, existing solutions generally suffer from a low performance.

Embodiments seek to provide a method of enhancing control plane reception by exploiting the granularity of the physical resource used for conveying the control plane.

Accordingly, a wireless telecommunications network node method may be provided. The method may comprises identifying a set or group of user equipment identifiers which may be allocated or used by cells for allocation or use by user equipment being supported by or connected to the cells. The method may also comprise defining a set or group of neighbouring co-channel cells comprising a plurality of cells. The method may also comprise determining a plurality of subsets or subgroups of the user equipment identifiers, each subset or subgroup of the user equipment identifiers being allocatable to or usable by an associated one the plurality of cells, user equipment identifiers from the plurality of subsets or subgroups of user equipment identifiers, when allocated to user equipment, locate corresponding messages for the user equipment within a resource at locations which reduce interference between those messages. By partitioning the user equipment identifiers, user equipment identifiers which, if allocated to co-channel user equipment would otherwise locate messages at locations which would cause interference, can instead be allocated to reduce or minimise interference.

In one embodiment, each subset comprises a first group of user equipment identifiers which, when allocated, locates corresponding messages for the user equipment within the resource to limit interference between those messages to within a first range. Hence, interference between messages fails to exceed a first threshold amount when user equipment identifiers within the first group are allocated.

In one embodiment, each subset comprises a second group of user equipment identifiers which, when allocated, locates corresponding messages for the user equipment within the resource to limit interference between those messages to within a second range. Hence, interference between messages fails to exceed a second threshold amount when user equipment identifiers within the first group are allocated. The second threshold amount may exceed the first threshold amount.

In one embodiment, user equipment identifiers within the second group have an indication associated therewith indicating that user equipment allocated one of the user equipment identifiers within the second group should transmit within a defined power range. Hence, the power may be limited when using the second group in order to further minimise interference.

In one embodiment, the indication indicates a power within the defined power range to be used for transmissions. Accordingly, a different maximum power may be indicated for each identifier.

In one embodiment, the step of determining comprises determining the plurality of subsets of the user equipment identifiers using a cell identifier for each of the plurality of cells. Accordingly, the cell identifier of each cell may be used to determine the subsets.

In one embodiment, the step of determining comprises determining the plurality of subsets of the user equipment identifiers using a size of the control channel resource available for carrying the control messages and a size of the control messages. Accordingly, the size of the control channel resource and/or the size of the control message maybe used to determine the subsets.

In one embodiment, the step of determining comprises determining the plurality of subsets of the user equipment identifiers using a subframe identifier. Accordingly, the subframe identifier maybe used to determine the subsets.

In one embodiment, the step of determining comprises determining the plurality of subsets by calculating an interference table based on the cell identifiers, the interference table identifying estimated interference between control channel messages at different locations within the control channel resource associated with user equipment identifiers. Producing an interference table detailing the interference between differing locations of the control channel resource associated with differing identifiers enables the interference different identifiers to be selected for inclusion in the differing subsets.

In one embodiment, the step of determining comprises determining the plurality of subsets by calculating the interference table based on at least one of: the size of the control channel resource; the size of the control messages; and the subframe identifier.

In one embodiment, the interference table identifies locations for which interference between control messages transmitted at those locations is limited to within the first range, from which each first group of user equipment identifiers is derivable.

In one embodiment, the interference table identifies locations for which interference between control messages transmitted at those locations is limited to within the second range, from which each second group of user equipment identifiers and the indication of how much less than full power should be used for transmissions is derivable.

In one embodiment, the method comprises the step of ordering each subset of user equipment identifiers to indicate that user equipment identifiers from the first group should be allocated to user equipment determined by at least one of: being located proximate to its supporting cell edge; achieving a mobility threshold; a signal strength of a serving cell; and a signal strength of a neighbouring cell first, and user equipment identifiers from the second group should be allocated thereafter.

In one embodiment, the method comprises the step of ordering each subset of user equipment identifiers to indicate that user equipment identifiers from the second group should be allocated to user equipment determined by at least one of: being located distal from its supporting cell edge; and failing to achieve a mobility threshold first, and user equipment identifiers from the first group should be allocated thereafter. It will be appreciated that user equipment located distal from its supporting cell edge are located proximate to the supporting cell centre.

In one embodiment, the method comprises the step of ordering comprises ordering each subset of user equipment identifiers to indicate an order in which user equipment identifiers from at least one of the first group and second group should be allocated.

In one embodiment, each user equipment identifier of the set of user equipment identifiers is only included in one of the subsets of user equipment identifiers.

In one embodiment, each user equipment identifier in a subset of user equipment identifiers is associated with a location which is not associated with cell identifiers in another subset of user equipment identifiers.

In one embodiment, the user equipment identifier is a radio network temporary identifier.

According to a second aspect, there is provided a wireless telecommunications network node, comprising: identifying logic operable to identify a set of user equipment identifiers usable by cells for allocation to user equipment being supported by the cells; set logic operable to define a set of neighbouring co-channel cells comprising a plurality of cells; and determining logic operable to determine a plurality of subsets of the user equipment identifiers, each subset of the user equipment identifiers being allocatable to an associated one the plurality of cells, user equipment identifiers from the plurality of subsets of user equipment identifiers, when allocated to user equipment, locating corresponding messages for the user equipment within a resource at locations which reduce interference between those messages.

In one embodiment, each subset comprises a first group of user equipment identifiers which, when allocated, locates corresponding messages for the user equipment within the resource to limit interference between those messages to within a first range.

In one embodiment, each subset comprises a second group of user equipment identifiers which, when allocated, locates corresponding messages for the user equipment within the resource to limit interference between those messages to within a second range.

In one embodiment, user equipment identifiers within the second group have an indication associated therewith indicating that user equipment allocated one of the user equipment identifiers within the second group should transmit within a defined power range.

In one embodiment, the indication indicates a power within the defined power range to be used for transmissions.

In one embodiment, the determining logic is operable to determine the plurality of subsets of the user equipment identifiers using a cell identifier for each of the plurality of cells.

In one embodiment, the determining logic is operable to determine the plurality of subsets of the user equipment identifiers using a size of the control channel resource available for carrying the control messages and a size of the control messages.

In one embodiment, the determining logic is operable to determine the plurality of subsets of the user equipment identifiers using a subframe identifier.

In one embodiment, the determining logic is operable to determine the plurality of subsets by calculating an interference table based on the cell identifiers, the interference table identifying estimated interference between control channel messages at different locations within the control channel resource associated with user equipment identifiers.

In one embodiment, the determining logic is operable to determine the plurality of subsets by calculating the interference table based on at least one of the size of the control channel resource, the size of the control messages and the subframe identifier.

In one embodiment, the interference table identifies locations for which interference between control messages transmitted at those locations is limited to within the first range, from which each first group of user equipment identifiers is derivable.

In one embodiment, the interference table identifies locations for which interference between control messages transmitted at those locations is limited to within the second range, from which each second group of user equipment identifiers and the indication of how much less than full power should be used for transmissions is derivable.

In one embodiment, the network node comprises ordering logic operable to order each subset of user equipment identifiers to indicate that user equipment identifiers from the first group should be allocated to user equipment determined to by at least one of: being located proximate to its supporting cell edge; achieving a mobility threshold; a signal strength of a serving cell; and a signal strength of a neighbouring cell first, and user equipment identifiers from the second group should be allocated thereafter.

In one embodiment, the ordering logic is operable to order each subset of user equipment identifiers to indicate that user equipment identifiers from the second group should be allocated to user equipment determined by at least one of: being located distal from its supporting cell edge; and failing to achieve a mobility threshold first, and user equipment identifiers from the first group should be allocated thereafter.

In one embodiment, the ordering logic is operable to order each subset of user equipment identifiers to indicate an order in which user equipment identifiers from at least one of the first group and the second group should be allocated.

In one embodiment, each user equipment identifier of the set of user equipment identifiers is only included in one of the subsets of user equipment identifiers.

In one embodiment, each user equipment identifier in a subset of user equipment identifiers is associated with a location which is not associated with cell identifiers in another subset of user equipment identifiers.

In one embodiment, the user equipment identifier is a radio network temporary identifier.

According to a technique, there is provided a wireless telecommunications network method, comprising: receiving a subset of user equipment identifiers usable by cells supported by the wireless telecommunications network node for allocation to user equipment being supported by the cells; and allocating a user equipment identifier from the subset to each user equipment being supported by at least one of the cells.

In one case, the subset comprises a first group of user equipment identifiers which, when allocated, locates corresponding messages for the user equipment within the resource to limit interference between those messages to within a first range.

In one case, the subset comprises a second group of user equipment identifiers which, when allocated, locates corresponding messages for the user equipment within the resource to limit interference between those messages to within a second range.

In one case, user equipment identifiers within the second group have an indication associated therewith indicating that user equipment allocated one of the user equipment identifiers within the second group should transmit within a defined power range.

In one case, the indication indicates a power within the defined power range to be used for transmissions.

In one case, the step of allocating comprises allocating user equipment identifiers from the first group to user equipment determined to be at least one of: located proximate to its supporting cell edge; and achieving a mobility threshold first, and to allocate user equipment identifiers from the second group thereafter.

In one case, the step of allocating comprises allocating user equipment identifiers from the second group to user equipment determined be at least one of: located distal from its supporting cell edge; and failing to achieve a mobility threshold first, and to allocate user equipment identifiers from the first group thereafter.

In one case, the step of allocating comprises allocating user equipment identifiers in an order indicated by the first group and the second group.

In one case, the user equipment identifier is a radio network temporary identifier.

According to a further technique, there is provided a wireless telecommunications network node, comprising reception logic operable to receive a subset of user equipment identifiers usable by cells supported by the wireless telecommunications network node for allocation to user equipment being supported by the cells; and allocation logic operable to allocate a user equipment identifier from the subset to each user equipment being supported by at least one of the cells.

In one case, the subset comprises a first group of user equipment identifiers which, when allocated, locates corresponding messages for the user equipment within the resource to limit interference between those messages to within a first range.

In one case, the subset comprises a second group of user equipment identifiers which, when allocated, locates corresponding messages for the user equipment within the resource to limit interference between those messages to within a second range.

In one case, user equipment identifiers within the second group have an indication associated therewith indicating that user equipment allocated one of the user equipment identifiers within the second group should transmit within a defined power range.

In one case, the indication indicates a power within the defined power range to be used for transmissions.

In one case, the allocation logic is operable to allocate user equipment identifiers from the first group to user equipment determined to be at least one of: located proximate to its supporting cell edge; and achieving a mobility threshold first, and to allocate user equipment identifiers from the second group thereafter.

In one case, the allocation logic is operable to allocate user equipment identifiers from the second group to user equipment determined be at least one of: located distal from its supporting cell edge; and failing to achieve a mobility threshold first, and to allocate user equipment identifiers from the first group thereafter.

In one case, the allocation logic is operable to allocate user equipment identifiers in an order indicated by the first group and the second group.

In one case, the user equipment identifier is a radio network temporary identifier.

According to a third aspect, there is provided a computer program product operable, when executed on a computer, to perform the method steps of the first aspect. Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

## BRIEF DESCRIPTION OF THE DRAWINGS

Embodiments of the present invention will now be described further, with reference to the accompanying drawings, in which:

Figure 1 illustrates an example heterogeneous cellular network;
Figure 2 illustrates the main steps followed in order to achieve UE PDCCH orthogonalization according to one embodiment;
Figure 3 illustrates and example deployment scenario;
Figure 4 illustrates a control region consisting of a set of contiguous Control Channel Elements (CCEs);
Figure 5 illustrates a logical-level example of how nine RNTIs can be partitioned into three subsets based on the collisions of the corresponding physical PDCCHs; and
Figure 6 to 9 illustrate an interference table showing a performance metric representing the number of resource elements by which the SSs overlap in the time-frequency space.

DESCRIPTION OF THE EMBODIMENTS

Overview

Before discussing the embodiments in any more detail, first an overview will be provided. Embodiments are particularly suited to Orthogonal Frequency-Division Multiple Access (OFDMA) systems, in particular to the Fourth Generation (4G) Long Term Evolution (LTE-(A)) standard family and the use of the control plane. In LTE-(A), the control messages are delivered by the Physical Downlink Control Channels (PDCCH) which convey user-specific information required for locating and decoding the data of individual users in the data plane.

In order reduce control channel interference in co-channel macro cell (MC)/ small cell (SC) deployments, embodiments exploit the following observations concerning the PDCCH messages:

- the location of a PDCCH within the control region belonging to a particular UE is a known function, depending primarily on the UE identifier (UE ID), and
- the size of a PDCCH can attain typically only four possible values whereby the maximum PDCCH size is typically used for UEs with poor signal reception,
- the cell base station (BS) controls the assignment of UE IDs to its UEs,
- the mapping of cell PDCCHs onto the actual physical OFDM subcarriers is carried out via a known deterministic algorithm whose mapping offset is a function of the cell identity.

In other words, for a given cell identity, controlling the UE ID allocated to user equipment controls the location of the control messages for that user equipment within the control region.

This understanding can then be exploited. First, the physical UE-specific PDCCHs of multiple cell BSs in the time-frequency space can be orthogonalized by the partitioning of the pool of available UE IDs with respect to a suitable "physical PDCCH collision" metric. More specifically, for given cell IDs (as well as other system parameters of secondary nature such as system bandwidth and PHICH/PBCH setting), the total set of available UE IDs can be partitioned among the BSs of neighbouring cells such that the physical PDCCHs of any two UEs being served by the BSs of two neighbouring cells are located in the most exclusive locations in the time-frequency space, i.e. do not collide, or collide only in the minimum necessary manner (hard orthogonality). In other words, it is possible to predetermine groups of UE IDs which, when allocated to user equipment, will cause those user equipment to receive control messages at locations within the control region which minimise interference between these control messages.

Secondly, power control techniques can be used to enable UE ID reuse depending on the UE mobility status (e.g., cell-edge vs. cell-centre) to implement additional soft orthogonality. In other words, when it is predetermined that interference will occur between control messages, the power of those control messages can be controlled in order to minimise that interference.

Figure 2 illustrates the main steps followed in order to achieve UE PDCCH orthogonalization.

At step S10, the available pool of UE ID are partitioned into **N** subsets **SUB** that minimize (maximize) a selected metric **MET**, reflecting the degree of collision among physical PDCCHs for ordered/unordered **N**-tuples of UE IDs, containing one UE ID from each of the **N** subset **SUB**, subject to

(i) static input parameters such as cell IDs, system bandwidth and PHICH/PBCH setting; and
(ii) a deterministic algorithm for mapping of logical PDCCHs into physical OFDM subcarriers.

At step S20, the **N** subsets **SUB** are assigned mutually exclusively to cells such that no two interfering cells share the same **SUB**.

As step S30, UE IDs available in **SUB** of the given BS are assigned by the BS to its UEs on the basis of UE mobility and channel quality.

At step S40, cell-specific PDCCH power control occurs based on the UE ID.

While being fully compliant with the LTE-(A) standard family, embodiments provably reach the maximum theoretical capacity of the control plane if the metric **MET** is set to represent the degree of physical PDCCH overlap in the time-frequency space.

Straightforward online/ offline optimization procedures can be used to create static/dynamic partitions reflecting the current cell load and UE mobility status.

Example Deployment

Figure 3 illustrates and example deployment scenario in which LTE-compliant co-channel SCs are deployed within the coverage range of an LTE-compliant MC. Consequently, mobile UEs crossing over or passing nearby cell edges experience strong co-channel interference that is likely to cause PDCCH disruption and thus handover failures, and/or corrupt the data reception. Although embodiments are applicable to practically any number of mutually interfering cells, this embodiment illustrates a simplified arrangement of a single MC and two neighbouring SCs.

Radio Network Temporal Identifier & Control Channel Elements

In the LTE standard, each UE is assigned a radio network temporal identifier (RNTI) for identification and coding purposes. The RNTI is a number unique within one cell, ranging from 000A to FFF2.

Also, each downlink (DL) subframe is divided into control region and data region. A cell BS (eNodeB) indicates the locations of specific UE data in the shared data region by sending one dedicated PDCCH pointer message per (scheduled) UE bearer (i.e., data "flow") in the control region. In addition, the eNodeB encodes the cyclic redundancy check of the PDCCH of a given UE with the RNTI of that particular UE. On the receiver side, UE performs a blind search to decode its designated PDCCH by using the knowledge of its RNTI for cyclic redundancy checks.

As shown in Figure 4, the control region consists of a set of contiguous Control Channel Elements (CCEs) that expand all across the system bandwidth and the first 3 OFDM symbols of each subframe. One CCE is comprised of 4 contiguous Resource Element Groups (REG), where each REG is comprised of 4 contiguous resource elements or OFDM subcarriers. Resource elements containing reference symbols or other signalling symbols are excluded from consideration. The CCEs are numbered from 0 to $\mathbf{N}_{CCE,k-1}$, where **k** is the subframe index and $\mathbf{N}_{CCE,k}$ is the total number of CCEs in the control region of subframe **k**.

In order to reduce the complexity of blind decoding, each UE monitors only a certain UE-specific search space (SS) in the control region that contains a limited number of possible PDCCH candidates. The UE attempts to blindly decode all the possible PDCCH candidates.

The total number of PDCCH candidates in a SS depends on the so-called aggregation level **L** equal to 1, 2, 4, or 8. A higher aggregation level **L** requires more CCEs resources as summarized in Table 1, but implies stronger coding and lower number of PDCCH candidates. The actual aggregation level may be selected based on channel quality indicators (CQI) reported by the UE.

Table 1 - Relationship between aggregation level, number of PDCCH candidates, and search space size [36.213]

| | Search space $S_k^{(L)}$ | | Number of PDCCH candidates $M^{(L)}$ |
|---|---|---|---|
| **Type** | **Aggregation level** $L$ | **Size [in CCEs]** | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

In particular, for a UE with a given RNTI, the CCEs corresponding to the PDCCH candidate **m** of search space $\mathbf{S}_k^L$ are completely defined by the following formulation:

$$L \cdot \left[(Y_k + m) \bmod \lfloor N_{CCE} / L \rfloor\right] + i \quad , \qquad (1)$$

where

- $\mathbf{m = 0,..., M^{(L)}-1}$ with $\mathbf{M}^{(L)}$ being the number of PDCCH candidates to monitor per search space according to the aggregation level **L**;
- **i = o,..., L -1**; and
- $\mathbf{Y}_k$ is defined by

$$\mathrm{Y_k = A \cdot Y_{k-1} \bmod D} \quad , \qquad (2)$$

where

- $Y_{-1}$ = **RNTI ≠ o**
- **A = 39827**;
- **D = 65537**; and
- **k** is the subframe number within a radio frame.

The number of PDCCH candidates $M^{(L)}$ and their sizes in terms of CCEs according to aggregation level **L** can be found in 3GPP TS 36.213, "Physical Layer Procedures," v. 10.6.0.
It can be seen that the UE RNTI is the only variable in Equation (1), i.e., UE RNTI uniquely determines the location of the UE SS. Practically, however, the logical CCEs of Equation (1) are permutated before their actual transmission onto physical OFDM subcarriers by using a standardized mapping algorithm that performs (i) deterministic block-level interleaving, and (ii) deterministic offset, defined based on the cell identify (C-ID), of the interleaver output (see 6.8.5 in 3GPP TS 36.211, "Physical Channels and Modulations," v. 10.6.0 for more details). Hence, the location of the PDCCHs physically transmitted by a cell depends both on the UE RNTIs and the C-ID.
In current cellular networks, the C-IDs are assigned in a static manner to ensure that such that no two interfering cells have the same C-ID and use a different shift of common reference signals for coherent demodulation purposes. However, UE RNTIs are assigned by serving BSs in a random manner, or without any specific preference. Assuming for the sake of generality, cellular systems with possibly variable C-IDs, that the variability of C-IDs is limited by inter-cell relationships (Neighbour Cell Relationship lists, handovers, etc.) and the service provisioning to a multitude of active/idle UEs. Hence, the C-IDs can be considered as relatively invariant compared to the usage period of UE IDs that can be easily changed on-demand by the serving cell without any update-period restrictions.

Radio Network Temporal Identifier Partitioning

In embodiments, the available pool of UE RNTIs is partitioned into generally **N** subsets **SUB** where **N** is a function of the number of mutually interfering cells with given C-IDs. In the example shown in Figure 3, the RNTI partitioning occurs into three subsets **SUB** by assuming three mutually interfering cells (one MC plus two SCs). The three subsets **SUB** are assigned to the three respective cells. Their BSs then use the specific subset **SUB** for assigning RNTIs to connected UEs. RNTIs from the subset **SUB** of other cells cannot be used.
More specifically, the available RNTIs are partitioned into three sets $SUB_X$, $SUB_Y$, $SUB_Z$ such that a performance metric $MET_1$ is minimized for RNTI triplets **[x, y, z]**, containing one element from each of the three subsets **SUB**, i.e., $x \in SUB_X$, $y \in SUB_Y$, $z \in SUB_Z$.
An advantageous performance metric $MET_1$ represents

- the probability that the SSs

  (i) generated by using Equation (1) for given **L** and randomly selected **x, y, z** with $x \in SUB_X$, $y \in SUB_Y$ $z \in SUB_Z$, and
  (ii) mapped onto physical OFDM subcarriers using a given deterministic interleaving/ offsetting function for assumed C-IDs,

  overlap in the time-frequency OFDM space for any SS pair (all SS pairs) by more than **x** resource elements,
- the cumulative number of resource elements by which the SSs

  (iii) generated by using Eq. (1) for predefined (ordered) sequence of triplets **[x, y, z]** and given **L** for $x \in SUB_X$, $y \in SUB_Y$, $z \in SUB_Z$, and
  (iv) mapped onto physical OFDM subcarriers using a given deterministic interleaving/offsetting function for assumed C-IDs,

  overlap in the time-frequency OFDM space.

It will be appreciated that the aggregation level **L** can be both a parameter and a variable of $MET_1$.
Preferably, the subsets **SUB** are ordered such that $MET_1$ (or, any other auxiliary metric $MET_2$ such as the number of overlapping CCEs) of each triple $[x_n, y_n, z_n]$, where $x_n$, $y_n$, $z_n$ denote the **n**-the element of the ordered subset $SUB_X$, $SUB_Y$, $SUB_Z$, respectively, is a non-decreasing/increasing function of the order number **n** in **SUB**.

Radio Network Temporal Identifier Allocation

The serving eNodeBs assign the RNTIs available in their respective subsets **SUB** to served UEs. The assignment of a particular RNTI is done depending on UE mobility and channel quality.

For example, assuming that subsets **SUB** are ordered in terms of the overlap of the corresponding SSs,

- cell-edge UEs are assigned to the RNTIs from perfectly SS-wise orthogonal RNTI triples, or the *least* likely ones to collide. In this context, embodiments also seek to increase the transmit power of the carrier CCEs to enhance the PDCCH reliability, given the likelihood of cell-edge UEs to engage in a relatively complex HO procedure,
- cell-centre UEs are assigned RNTIs from RNTI triplets corresponding to the *most* overlapping SSs. Moreover, given the cell-centre UE location, the transmit power of the corresponding CCEs can be reduced to mitigate the negative effects of SS overlap. In this manner, soft orthogonality among (partially) colliding SSs can be created.

Figure 5 shows a logical-level example of how nine RNTIs can be partitioned into three subsets based on the collisions of the corresponding physical PDCCHs, and how different power levels can be assigned depending on the UE mobility status. A performance metric representing the number of resource elements by which the SSs overlap in the time-frequency space is shown in Figures 6 to 9.

It is to be noted that the LTE standard allows to dynamically modify the RNTI of any UE by means of high-level *RRC_Connection_Reconfiguration_Command* issued by the eNodeB. This enables a relatively fast and on-demand (re)configuration of UE RNTIs depending on the variations of traffic and mobility conditions, as well as the potential implementation requirements of the proposed scheme.

The problem of metric minimization can be carried out by using a dedicated computer program. In this context, it is to be noted that multiple RNTIs occupy identical locations in the control region owing to the ***m od*** operation in Equation (1). Practically, the number of non-repetitive basic RNTIs occupying unique locations is approximately 50 in an LTE network having a 20 MHz bandwidth. Hence, in one embodiment, the above-described partitioning of the RNTIs into subsets **SUB** is done only for the basic "primary" RNTI whereby the $\mathbf{N}_{CCE,k}/\mathbf{L}$-multiples of the primary RNTIs (i.e., the "image" RNTIs) are then simply assigned to the same set **SUB** as the corresponding basic RNTI. This measure further reduces the complexity of the method to an extent allowing fast dynamic on-demand repartitioning of available RNTIs among cells.

Lastly, it is to be noted that in embodiments, only the least "colliding" RNTIs will be used for orthogonalizing the transmissions of cell-edge users and/or highly mobile users. Cell-centre and low-mobility UEs can be essentially assigned an arbitrary RNTI owing to the proposed usage of reduced transmit power. Generally speaking, the partitioned RNTI subsets can be deemed sufficiently large for practical purposes because

(i) the partitioning of the UE RNTI pool is carried out at most by few (2-4) strongly interfering (neighbouring) cells with a history of (frequent) mutual handovers,
(ii) the size of the UE RNTI pool standardized in LTE is at the order of tens of thousands of unique UE RNTIs occupying tens of unique locations in the logical control space, and
(iii) the number of simultaneously active users in one cell is at most at the order of tens, while the presence of users in a handover condition is relatively scarce ("order of units").

It will be appreciated that there is theoretically no room for frequency-domain orthogonalization of control message when <u>all</u> cells are <u>fully</u> loaded (i.e., control messages of all cells stretch over the entire control region) - a fact that limits the performance of any scheme. However, the proposed soft-orthogonality using selective power control creates a spatial reuse pattern on the control channel that alleviates to the maximum feasible extent the interference problem.

While being fully distributed and compliant with the LTE-(A) standard family, it will be appreciated that embodiments reduce the probability of the control PDCCH messages colliding, i.e. interfere among each other. Embodiments allow the maximum theoretical capacity of the control plane to be reached if the minimized metric **MET** represents the degree of search space (PDCCH) overlap in the time-frequency space.

Embodiments significantly reduce the probability of handover failure/ data decoding error, a major problem in HetNet environments.

Embodiments provide a contrast to current LTE solutions which only ensure that control messages do not collide on a *cell* level, i.e. within a single cell. Inter-cell (network) level coordination of PDCCH messages is non-existent (random) which leads to high probabilities on collision even under mild traffic.

Embodiments, however, allow avoiding collisions of control messages on a network level, especially among interfering (neighbouring) cells. In fact, embodiments are able to minimize the probability of control message collision to the theoretical minimum, i.e. maximize the potential of the LE-(A) standards. Practical variations of traffic and mobility in real-life networks are efficiently compensated by dedicated power control of the control region.

Embodiments are based on simple adaptation of UE RNTIs to minimize physical PDCCH collisions of selected UEs subject to logical-to-physical CCE-mapping and static cell IDs is not characterized by similar practical limitations, nor by any *a priori* partitioning constraint.

Embodiments seek to solve a fundamental problem of co-channel small-cell deployments - the control channel interference - that causes primarily handover (HO) failures and whose extent escalates with the SC deployment density.

Since embodiments are distributed and fully compliant with the LTE-(A) standard family, it is directly and readily applicable to BSs for both macro and small (metro/femto/pico cells) cell deployments.

In fact, embodiments guaranteeing near-optimum usage and reliability of the control channel.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope, which is defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Moreover, all statements herein reciting principles, aspects, and embodiments of the invention, as well as specific examples thereof, are intended to encompass equivalents thereof.

## Claims

1. A wireless telecommunications network node method, comprising:

   identifying a set of user equipment identifiers usable by cells for allocation to user equipment being supported by said cells;
   defining a set of neighbouring co-channel cells comprising a plurality of cells; and
   determining a plurality of subsets of said user equipment identifiers, each subset of said user equipment identifiers being allocatable to an associated one of said plurality of cells, user equipment identifiers from said plurality of subsets of user equipment identifiers, when allocated to user equipment, locating corresponding messages for said user equipment within a resource at locations which reduce interference between those messages.

2. The method of claim 1, wherein each subset comprises a first group of user equipment identifiers which, when allocated, locates corresponding messages for said user equipment within said resource to limit interference between those messages to within a first range.

3. The method of claim 1 or 2, wherein each subset comprises a second group of user equipment identifiers which, when allocated, locates corresponding messages for said user equipment within said resource to limit interference between those messages to within a second range.

4. The method of claim 3, wherein user equipment identifiers within said second group have an indication associated therewith indicating that user equipment allocated one of said user equipment identifiers within said second group should transmit within a defined power range.

5. The method of any preceding claim, wherein said step of determining comprises determining said plurality of subsets by calculating an interference table based on said cell identifiers, said interference table identifying estimated interference between control channel messages at different locations within said control channel resource associated with user equipment identifiers.

6. The method of any preceding claim, wherein said step of determining comprises determining said plurality of subsets by calculating said interference table based on at least one of: said size of said control channel resource; said size of said control messages; and said subframe identifier.

7. The method of claim 5 or 6, wherein said interference table identifies locations for which interference between control messages transmitted at those locations is limited to within said first range, from which each first group of user equipment identifiers is derivable.

8. The method of any one of claims 5 to 7, wherein said interference table identifies locations for which interference between control messages transmitted at those locations is limited to within said second range, from which each second group of user equipment identifiers and said indication of how much less than full power should be used for transmissions is derivable.

9. The method of any one of claims 3 to 8, comprising the step of ordering each subset of user equipment identifiers to indicate that user equipment identifiers from said first group should be allocated to user equipment determined by at least one of: being located proximate to its supporting cell edge; achieving a mobility threshold; a signal strength of a serving cell; and a signal strength of a neighbouring cell first, and user equipment identifiers from said second group should be allocated thereafter.

10. The method of any one of claims 3 to 9, comprising the step of ordering each subset of user equipment identifiers to indicate that user equipment identifiers from said second group should be allocated to user equipment determined by at least one of: being located distal from its supporting cell edge; and failing to achieve a mobility threshold first, and user equipment identifiers from said first group should be allocated thereafter.

11. The method of claims 9 or 10, wherein the step of ordering comprises ordering each subset of user equipment identifiers to indicate an order in which user equipment identifiers from at least one of said first group and second group should be allocated.

12. A wireless telecommunications network node, comprising:

identifying logic operable to identify a set of user equipment identifiers usable by cells for allocation to user equipment being supported by said cells;
set logic operable to define a set of neighbouring co-channel cells comprising a plurality of cells; and
determining logic operable to determine a plurality of subsets of said user equipment identifiers, each subset of said user equipment identifiers being allocatable to an associated one said plurality of cells, user equipment identifiers from said plurality of subsets of user equipment identifiers, when allocated to user equipment, locating corresponding messages for said user equipment within a resource at locations which reduce interference between those messages.

13. A computer program product operable, when executed on a computer, to perform the method steps of any one of claims 1 to 11.

**Patentansprüche**

1. Verfahren eines drahtlosen Telekommunikationsnetzknotens, umfassend:

   Identifizieren einer Menge von Benutzergerätekennungen, die durch Zellen zur Vergabe an Benutzergeräte, die durch die Zellen unterstützt werden, benutzbar sind;
   Definieren einer Menge von benachbarten Kokanalzellen, die mehrere Zellen umfassen; und
   Bestimmen mehrerer Teilmengen der Benutzergerätekennungen, wobei jede Teilmenge der Benutzergerätekennungen an eine zugeordnete der mehreren Zellen vergebbar ist, wobei Benutzergeräte Kennungen aus den mehreren Teilmengen von Benutzergerätekennungen, wenn sie an Benutzergeräte vergeben werden, entsprechende Nachrichten für das Benutzergerät in einer Ressource an Orten lokalisieren, wodurch Störungen zwischen diesen Nachrichten verringert werden.

2. Verfahren nach Anspruch 1, wobei jede Teilmenge eine erste Gruppe von Benutzergerätekennungen umfasst, die, wenn sie vergeben wird, entsprechenden Nachrichten für das Benutzergerät in der Ressource lokalisiert, um Störungen zwischen diesen Nachrichten auf innerhalb eines ersten Bereichs zu begrenzen.

3. Verfahren nach Anspruch 1 oder 2, wobei jede Teilmenge eine zweite Gruppe von Benutzergerätekennungen umfasst, die, wenn sie vergeben wird, entsprechenden Nachrichten für das Benutzergerät in der Ressource lokalisiert, um Störungen zwischen diesen Nachrichten auf innerhalb eines zweiten Bereichs zu begrenzen.

4. Verfahren nach Anspruch 3, wobei Benutzergerätekennungen in der zweiten Gruppe eine Angabe zugeordnet ist, die angibt, dass Benutzergeräte, an die eine der Benutzergerätekennungen in der zweiten Gruppe vergeben werden, in einem definierten Leistungsbereich senden sollten.

5. Verfahren nach einem der vorhergehenden Ansprüche, wobei der Schritt des Bestimmens Bestimmen der mehreren Teilmengen durch Berechnen einer Störungstabelle auf der Basis der Zellenkennungen umfasst, wobei die Störungstabelle geschätzte Störungen zwischen Steuerkanalnachrichten an verschiedenen Orten in der Steuerkanalressource, die Benutzergerätekennungen zugeordnet ist, identifiziert.

6. Verfahren nach einem der vorhergehenden Ansprüche, wobei der Schritt des Bestimmens Bestimmen der mehreren Teilmengen durch Berechnen der Störungstabelle auf der Basis der Größe der Steuerkanalressource und/oder der Größe der Steuerkanalnachrichten und/oder der Subrahmenkennung umfasst.

7. Verfahren nach Anspruch 5 oder 6, wobei die Störungstabelle Orte identifiziert, für die Störungen zwischen an diesen Orten gesendeten Steuernachrichten auf den ersten Bereich begrenzt sind, woraus jede erste Gruppe von Benutzergerätekennungen ableitbar ist.

8. Verfahren nach einem der Ansprüche 5 bis 7, wobei die Störungstabelle Orte identifiziert, für die Störungen zwischen an diesen Orten gesendeten Steuernachrichten auf den zweiten Bereich begrenzt sind, woraus jede zweite Gruppe von Benutzergerätekennungen und die Angabe, wieviel weniger als die volle Leistung für Übertragungen verwendet werden sollte, ableitbar sind.

9. Verfahren nach einem der Ansprüche 3 bis 8, das den Schritt des Ordnens jeder Teilmenge von Benutzergerätekennungen umfasst, um anzugeben, dass zuerst Benutzergerätekennungen aus der ersten Gruppe an Benutzergeräte vergeben werden sollten, die dadurch bestimmt werden, dass sie sich in der Nähe des Rands ihrer unterstützenden Zelle befinden und/oder eine Mobilitätsschwelle erzielen und/oder durch eine Signalstärke einer versorgenden Zelle und/oder durch eine Signalstärke einer benachbarten Zelle, und Benutzergerätekennungen aus der zweiten Gruppe danach vergeben werden sollten.

10. Verfahren nach einem der Ansprüche 3 bis 9, das den Schritt des Ordnens jeder Teilmenge von Benutzergerätekennungen umfasst, um anzugeben, dass zuerst Benutzergerätekennungen aus der zweiten Gruppe an Benutzergeräte vergeben werden sollten, die dadurch bestimmt werden, dass sie sich entfernt von dem Rand ihrer unterstützenden Zelle befinden und/oder eine Mobilitätsschwelle nicht erzielen, und Benutzergerätekennungen aus der ersten Gruppe danach vergeben werden sollten.

11. Verfahren nach Anspruch 9 oder 10, wobei der Schritt des Ordnens Ordnen jeder Teilmenge von Benutzergerätekennungen umfasst, um eine Reihenfolge anzugeben, in der Benutzergerätekennungen aus der ersten Gruppe und/oder der zweiten Gruppe vergeben werden sollten.

**12.** Drahtloser Telekommunikationsnetzknoten, umfassend:

Identifizierungslogik, betreibbar zum Identifizieren einer Menge von Benutzergerätekennungen, die durch Zellen zur Vergabe an Benutzergeräte, die durch die Zellen unterstützt werden, benutzbar sind;
Mengenlogik, betreibbar zum Definieren einer Menge von benachbarten Kokanalzellen, die mehrere Zellen umfassen; und
Bestimmungslogik, betreibbar zum Bestimmen mehrerer Teilmengen der Benutzergerätekennungen, wobei jede Teilmenge der Benutzergerätekennungen an eine zugeordnete der mehreren Zellen vergebbar ist, wobei Benutzergeräte Kennungen aus den mehreren Teilmengen von Benutzergerätekennungen, wenn sie an Benutzergeräte vergeben werden, entsprechende Nachrichten für das Benutzergerät in einer Ressource an Orten lokalisieren, wodurch Störungen zwischen diesen Nachrichten verringert werden.

**13.** Computerprogrammprodukt, das, wenn es auf einem Computer ausgeführt wird, betreibbar ist, um die Verfahrensschritte nach einem der Ansprüche 1 bis 11 auszuführen.

**Revendications**

**1.** Procédé concernant un noeud de réseau de télécommunications sans fil, comprenant:

l'identification d'un ensemble d'identifiants d'équipements d'utilisateur utilisables par les cellules pour une allocation à un équipement d'utilisateur supporté par lesdites cellules ;
la définition d'un ensemble de cellules d'un co-canal voisin comprenant une pluralité de cellules ; et
la détermination d'une pluralité de sous-ensembles desdits identifiants d'équipements d'utilisateur, chaque sous-ensemble desdits identifiants d'équipements d'utilisateur pouvant être alloué à l'une des cellules associées de ladite pluralité de cellules, les identifiants d'équipements d'utilisateur provenant de ladite pluralité de sous-ensembles d'identifiants d'équipements d'utilisateur, lorsqu'ils sont alloués à un équipement d'utilisateur, la localisation des messages correspondants pour ledit équipement d'utilisateur dans une ressource à des emplacements qui réduisent les interférences entre ces messages.

**2.** Procédé selon la revendication 1, dans lequel chaque sous-ensemble comprend un premier groupe d'identifiants d'équipements d'utilisateur qui, lorsqu'il est alloué, localise les messages correspondants pour ledit équipement d'utilisateur au sein de ladite ressource afin de limiter les interférences entre ces messages dans une première plage.

**3.** Procédé selon les revendications 1 ou 2, dans lequel chaque sous-ensemble comprend un second groupe d'identifiants d'équipements d'utilisateur qui, lorsqu'il alloué, localise les messages correspondants pour ledit équipement d'utilisateur au sein de ladite ressource afin de limiter les interférences entre ces messages dans une seconde plage.

**4.** Procédé selon la revendication 3, dans lequel les identifiants d'équipements d'utilisateur faisant partie dudit second groupe ont une indication qui leur est associée indiquant que l'équipement d'utilisateur auquel est alloué l'un des identifiants d'équipement d'utilisateur faisant partie dudit second groupe doit émettre dans une plage de puissance définie.

**5.** Procédé selon l'une quelconque des revendications précédentes, dans lequel ladite étape de détermination comprend la détermination de ladite pluralité de sous-ensembles en calculant une table d'interférences sur la base desdits identifiants des cellules, ladite table d'interférences identifiant une interférence estimée entre des messages de canal de commande situés à différents emplacements au sein de ladite ressource de canal de commande associée à des identifiants d'équipements d'utilisateur.

**6.** Procédé selon l'une quelconque des revendications précédentes, dans lequel ladite étape de détermination comprend la détermination de ladite pluralité de sous-ensembles en calculant ladite table d'interférences sur la base de l'un au moins parmi les éléments suivants : ladite taille de ladite ressource de canal de commande ; ladite taille desdits messages de commande ; et ledit identifiant de sous-trame.

**7.** Procédé selon les revendications 5 ou 6, dans lequel ladite table d'interférences identifie les emplacements pour lesquels les interférences entre les messages de commande transmis à ces emplacements sont limités à l'intérieur de ladite première plage, à partir de laquelle chaque premier groupe d'identifiants d'équipement d'utilisateur peut être obtenu.

8. Procédé selon l'une quelconque des revendications 5 à 7, dans lequel ladite table d'interférences identifie les emplacements pour lesquels l'interférence entre les messages de commande transmis à ces emplacements est limitée à l'intérieur de ladite seconde plage, à partir de laquelle chaque second groupe d'identifiants d'équipement d'utilisateur et ladite indication de quelle quantité en moins par rapport à la puissance totale doit être utilisée pour les transmissions peuvent être obtenues.

9. Procédé selon l'une quelconque des revendications 3 à 8, comprenant l'étape consistant à ordonner chaque sous-ensemble d'identifiants d'équipements d'utilisateur pour indiquer que les identifiants d'équipements d'utilisateur appartenant audit premier groupe devraient être alloués à un équipement d'utilisateur déterminé par au moins l'un des éléments suivants : le fait d'être situé à proximité du bord de sa cellule de support ; le fait d'atteindre un seuil de mobilité ; une intensité de signal d'une cellule de desserte ; et une intensité de signal d'une cellule voisine en premier, et ensuite les identifiants d'équipements d'utilisateur provenant dudit second groupe devraient être attribués.

10. Procédé selon l'une quelconque des revendications 3 à 9, comprenant l'étape consistant à ordonner chaque sous-ensemble d'identifiants d'équipements d'utilisateur pour indiquer que les identifiants d'équipements d'utilisateur appartenant audit second groupe devraient être alloués à un équipement d'utilisateur déterminé par au moins l'un des éléments suivants : le fait d'être situé à distance du bord de sa cellule de support ; le fait de ne pas atteindre un seuil de mobilité d'abord, et ensuite les identificateurs d'équipements d'utilisateur provenant dudit premier groupe qui devraient être alloués.

11. Procédé selon les revendications 9 ou 10, dans lequel l'étape de mise en ordre comprend la mise en ordre de chaque sous-ensemble d'identifiants d'équipement d'utilisateur pour indiquer un ordre dans lequel les identifiants d'équipements d'utilisateur provenant d'au moins un desdits premier et second groupes devraient être alloués.

12. Noeud de réseau de télécommunications sans fil, comprenant :

une logique d'identification utilisable pour identifier un ensemble d'identifiants d'équipements d'utilisateur à utiliser par les cellules pour une allocation à un équipement d'utilisateur supporté par lesdites cellules ;
une logique établie utilisable pour définir un ensemble de cellules d'un co-canal voisin comprenant une pluralité de cellules ; et
une logique de détermination utilisable pour déterminer une pluralité de sous-ensembles desdits identifiants d'équipements d'utilisateur, chaque sous-ensemble desdits identifiants d'équipement d'utilisateur pouvant être alloué à l'une des cellules associées de ladite pluralité de cellules, les identifiants d'équipements d'utilisateur provenant de ladite pluralité de sous-ensembles d'identifiants d'équipements d'utilisateur, lorsqu'ils sont alloués à un équipement d'utilisateur, la localisation des messages correspondants pour ledit équipement d'utilisateur dans une ressource à des emplacements qui réduisent les interférences entre ces messages.

13. Progiciel informatique utilisable, lorsqu'il est exécuté sur un ordinateur, pour mettre en oeuvre les étapes du procédé selon l'une quelconque des revendications 1 à 11.

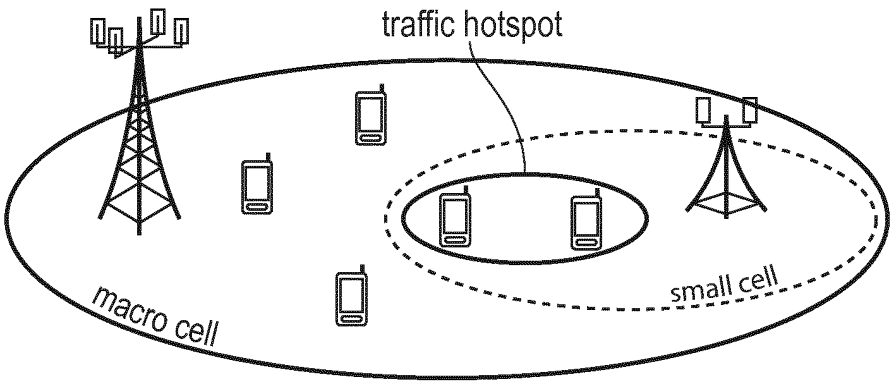


FIG. 1

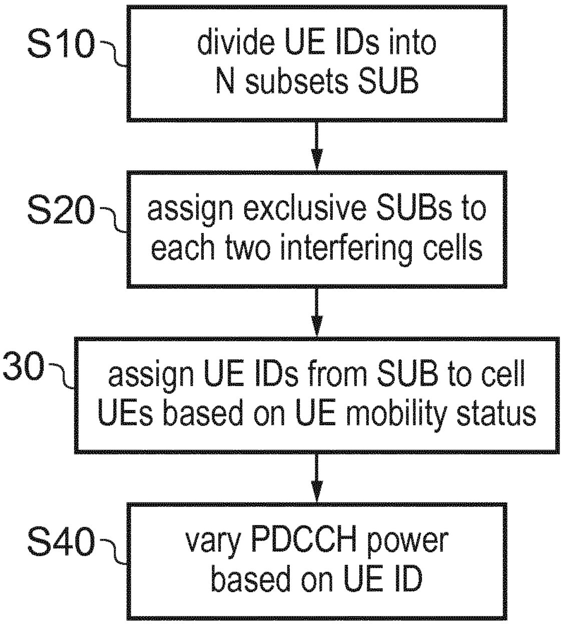


FIG. 2

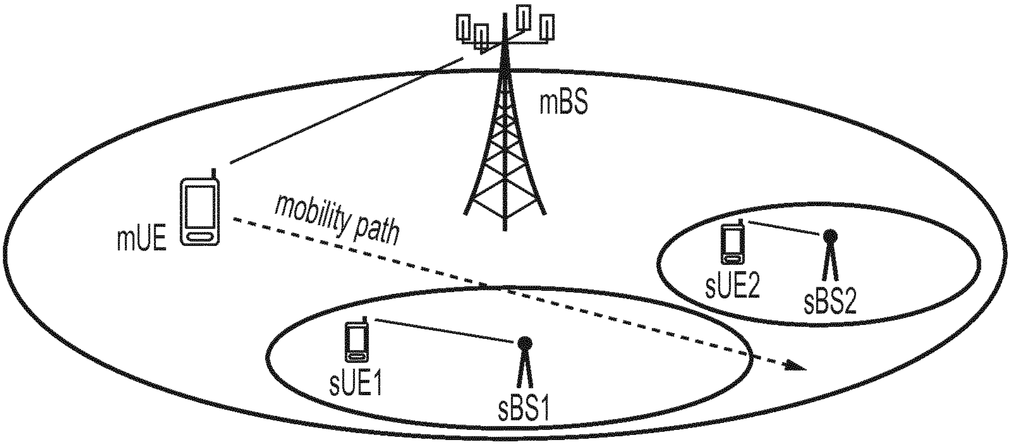


FIG. 3

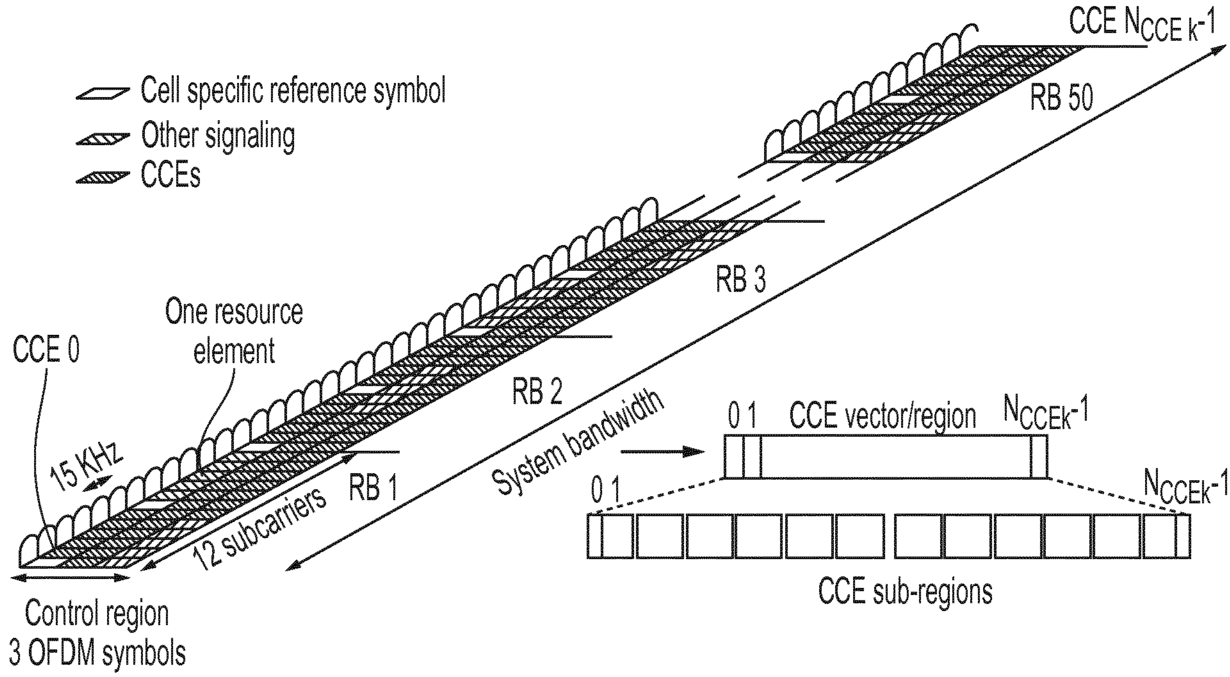
Cell specific reference symbol
Other signaling
CCEs
CCE $N_{CCE\,k}$-1
RB 50
RB 3
One resource element
CCE 0
RB 2
15 KHz
System bandwidth
RB 1
12 subcarriers
0 1
CCE vector/region
$N_{CCEk}$-1
0 1
$N_{CCEk}$-1
CCE sub-regions
Control region
3 OFDM symbols

FIG. 4

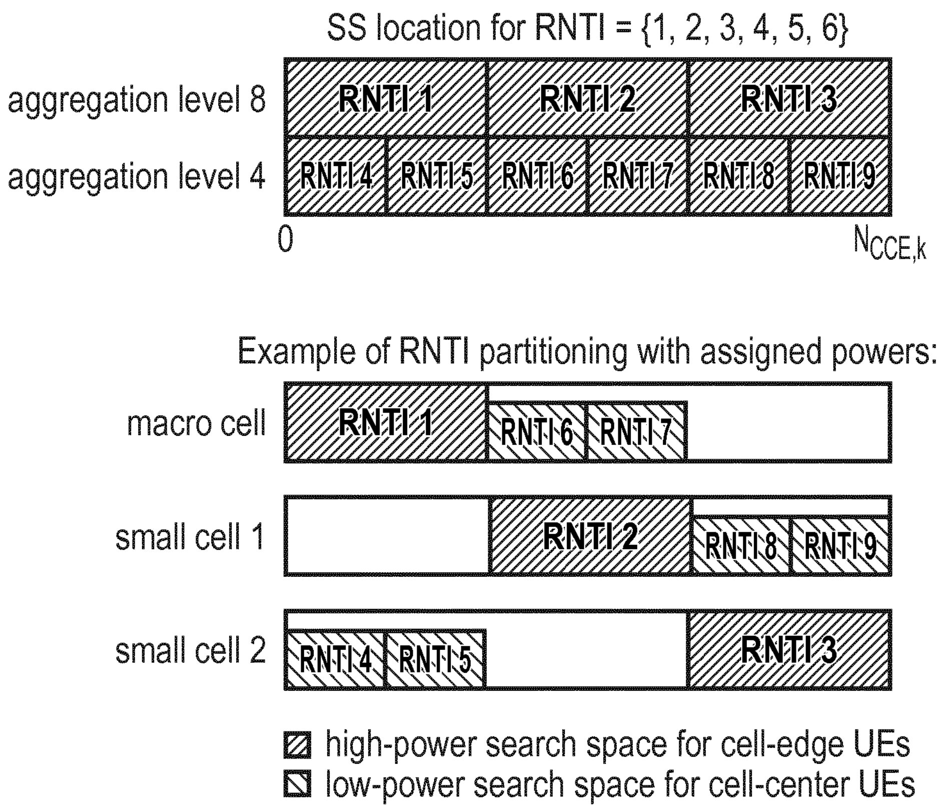
SS location for RNTI = {1, 2, 3, 4, 5, 6}
aggregation level 8
RNTI 1
RNTI 2
RNTI 3
aggregation level 4
RNTI 4
RNTI 5
RNTI 6
RNTI 7
RNTI 8
RNTI 9
0
$N_{CCE,k}$
Example of RNTI partitioning with assigned powers:
macro cell
RNTI 1
RNTI 6
RNTI 7
small cell 1
RNTI 2
RNTI 8
RNTI 9
small cell 2
RNTI 4
RNTI 5
RNTI 3
high-power search space for cell-edge UEs
low-power search space for cell-center UEs

FIG. 5

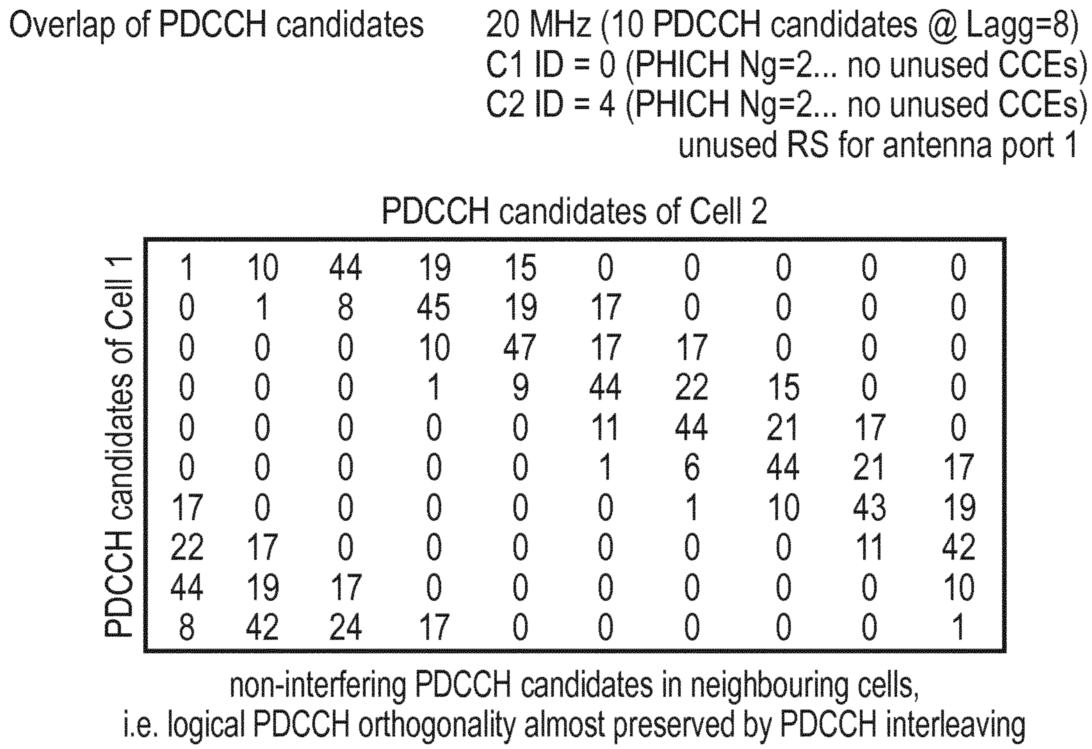
Overlap of PDCCH candidates
20 MHz (10 PDCCH candidates @ Lagg=8)
C1 ID = 0 (PHICH Ng=2... no unused CCEs)
C2 ID = 4 (PHICH Ng=2... no unused CCEs)
unused RS for antenna port 1
PDCCH candidates of Cell 2
PDCCH candidates of Cell 1
1 10 44 19 15 0 0 0 0 0
0 1 8 45 19 17 0 0 0 0
0 0 0 10 47 17 17 0 0 0
0 0 0 1 9 44 22 15 0 0
0 0 0 0 0 11 44 21 17 0
0 0 0 0 0 1 6 44 21 17
17 0 0 0 0 0 1 10 43 19
22 17 0 0 0 0 0 0 11 42
44 19 17 0 0 0 0 0 0 10
8 42 24 17 0 0 0 0 0 1
non-interfering PDCCH candidates in neighbouring cells,
i.e. logical PDCCH orthogonality almost preserved by PDCCH interleaving

FIG. 6

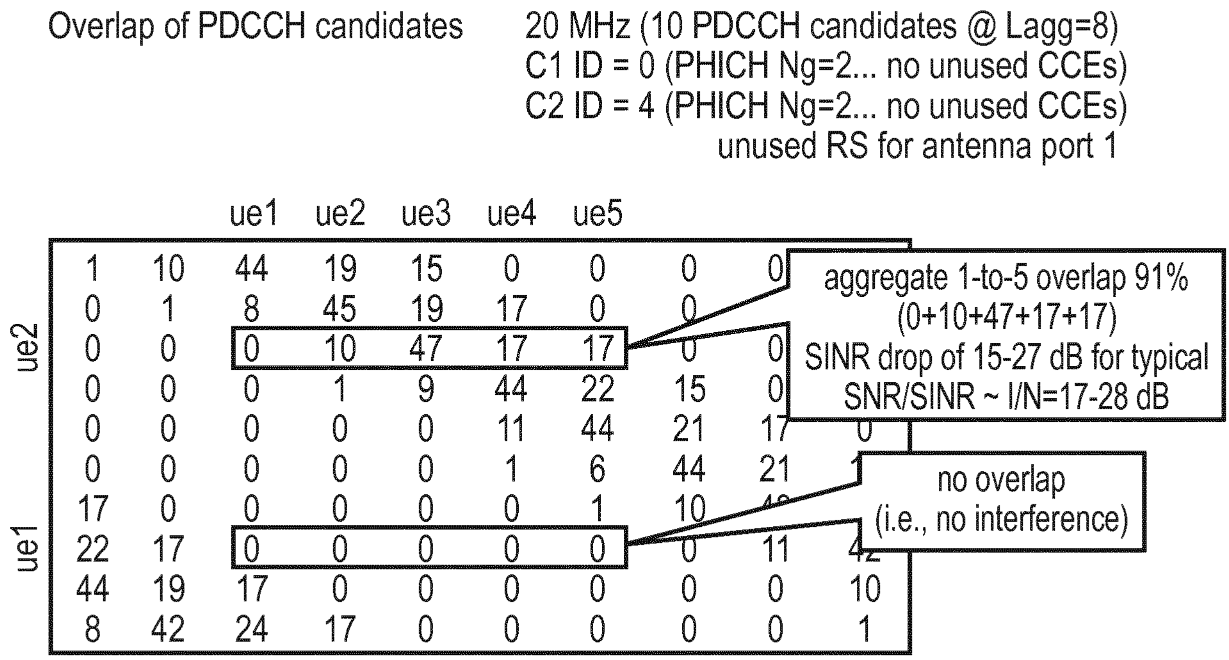
Overlap of PDCCH candidates
20 MHz (10 PDCCH candidates @ Lagg=8)
C1 ID = 0 (PHICH Ng=2... no unused CCEs)
C2 ID = 4 (PHICH Ng=2... no unused CCEs)
unused RS for antenna port 1
ue1 ue2 ue3 ue4 ue5
ue2
ue1
1 10 44 19 15 0 0 0 0
0 1 8 45 19 17 0 0
0 0 0 10 47 17 17 0 0
0 0 0 1 9 44 22 15 0
0 0 0 0 0 11 44 21 17 0
0 0 0 0 0 1 6 44 21
17 0 0 0 0 0 1 10
22 17 0 0 0 0 0 0 11
44 19 17 0 0 0 0 0 0 10
8 42 24 17 0 0 0 0 0 1
aggregate 1-to-5 overlap 91%
(0+10+47+17+17)
SINR drop of 15-27 dB for typical
SNR/SINR ~ I/N=17-28 dB
no overlap
(i.e., no interference)

FIG. 7

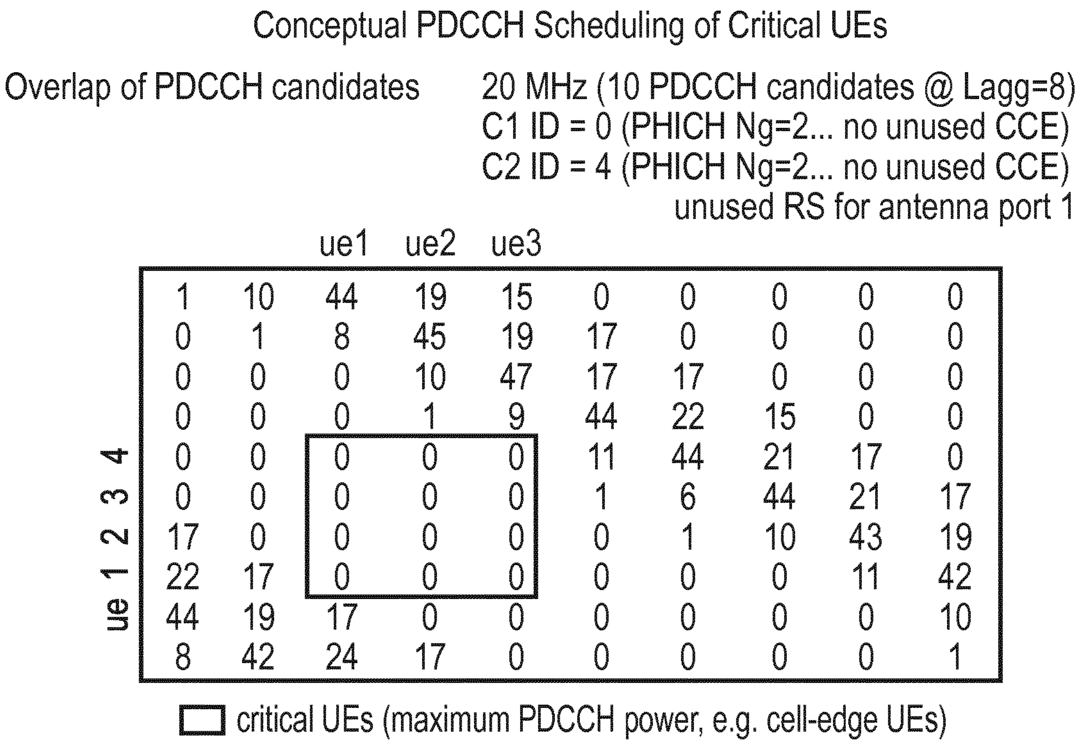
Conceptual PDCCH Scheduling of Critical UEs
Overlap of PDCCH candidates
20 MHz (10 PDCCH candidates @ Lagg=8)
C1 ID = 0 (PHICH Ng=2... no unused CCE)
C2 ID = 4 (PHICH Ng=2... no unused CCE)
unused RS for antenna port 1
ue1 ue2 ue3
ue 1 2 3 4
1 10 44 19 15 0 0 0 0 0
0 1 8 45 19 17 0 0 0 0
0 0 0 10 47 17 17 0 0 0
0 0 0 1 9 44 22 15 0 0
0 0 0 0 0 11 44 21 17 0
0 0 0 0 0 1 6 44 21 17
17 0 0 0 0 0 1 10 43 19
22 17 0 0 0 0 0 0 11 42
44 19 17 0 0 0 0 0 0 10
8 42 24 17 0 0 0 0 0 1
critical UEs (maximum PDCCH power, e.g. cell-edge UEs)

FIG. 8

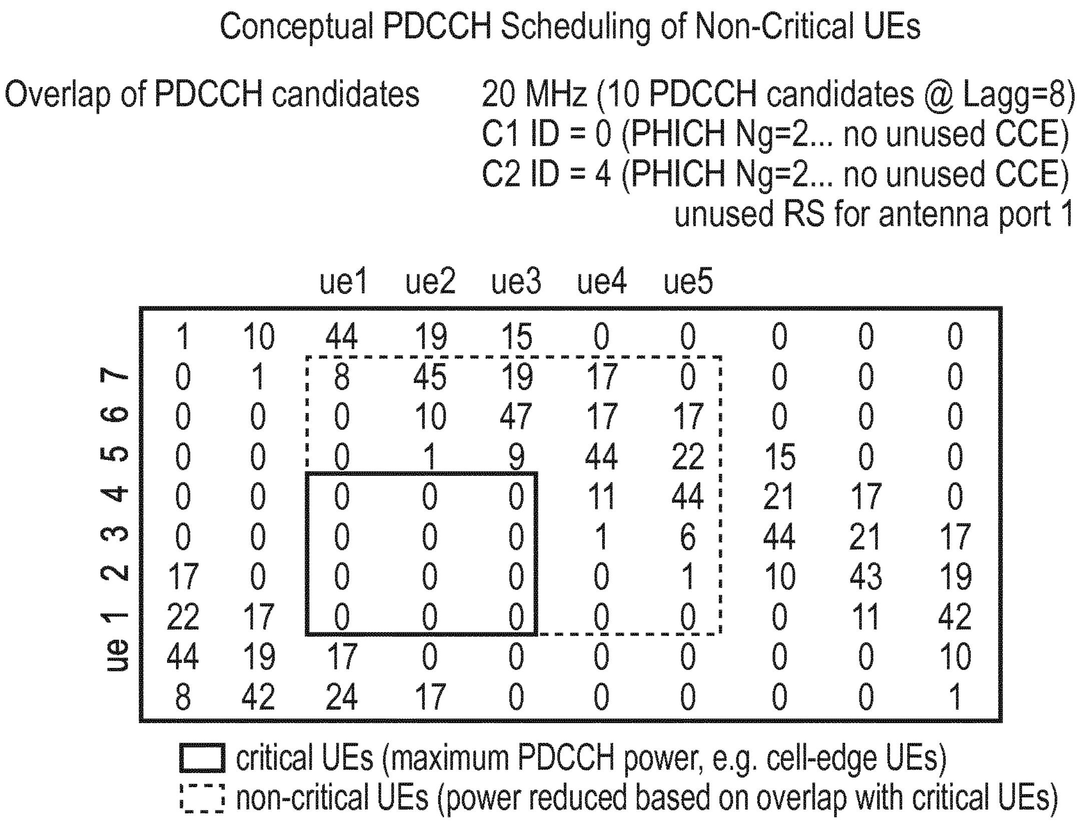
Conceptual PDCCH Scheduling of Non-Critical UEs
Overlap of PDCCH candidates
20 MHz (10 PDCCH candidates @ Lagg=8)
C1 ID = 0 (PHICH Ng=2... no unused CCE)
C2 ID = 4 (PHICH Ng=2... no unused CCE)
unused RS for antenna port 1
ue1 ue2 ue3 ue4 ue5
ue 1 2 3 4 5 6 7
1 10 44 19 15 0 0 0 0 0
0 1 8 45 19 17 0 0 0 0
0 0 0 10 47 17 17 0 0 0
0 0 0 1 9 44 22 15 0 0
0 0 0 0 0 11 44 21 17 0
0 0 0 0 0 1 6 44 21 17
17 0 0 0 0 0 1 10 43 19
22 17 0 0 0 0 0 0 11 42
44 19 17 0 0 0 0 0 0 10
8 42 24 17 0 0 0 0 0 1
critical UEs (maximum PDCCH power, e.g. cell-edge UEs)
non-critical UEs (power reduced based on overlap with critical UEs)

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010108136 A
- WO 2010141913 A